# EUROPEAN PATENT SPECIFICATION

(11) **EP 1 657 849 B1**
(45) Date of publication and mention of the grant of the patent: **17.12.2008**
(21) Application number: 06002741.4
(22) Date of filing: 27.03.2003
(51) Int. Cl.: H04L 12/18

(54) **Addressed braodcast messaging**
Adressierte Rundfunknachrichtenübertragung
Diffusion de messages adressés

(30) Priority: 02.05.2002 US 137635
(43) Date of publication of application: 17.05.2006
(62) Divisional of application: 03007063.5
(73) Proprietor: Microsoft Corporation, Redmond WA 98052 (US)
(72) Inventor: Danker, Daniel, Sunnyvale California 94085 (US); Wassermann, Steven, Mountain View California 94041 (US)
(74) Representative: Grünecker, Kinkeldey, Stockmair & Schwanhäusser Anwaltssozietät

(56) References cited:
- EP-A- 0 463 451
- EP-A- 0 793 387
- EP-A- 0 798 886
- WO-A-00/44173
- WO-A-02/17620
- WO-A-93/20654
- DE-A- 10 029 643
- US-A- 4 829 569
- US-A- 4 866 770
- US-A- 5 497 186
- US-A- 5 619 501
- GUILLOU L C ET AL: "ENCIPHERMENT AND CONDITIONAL ACCESS" SMPTE JOURNAL, SMPTE INC. SCARSDALE, N.Y, US, vol. 103, no. 6, 1 June 1994 (1994-06-01), pages 398-406, XP000457575 ISSN: 0036-1682

## Description

### TECHNICAL FIELD

This invention relates to television entertainment architectures and, in particular, to methods, program products, and systems for addressing a broadcast message.

### BACKGROUND

Television broadcasting provides a ready and widespread means for mass communication. Digital video signals are received by a typical television system by using a set-top box, or similar device, from the television broadcasting on a cable system, a satellite system, and/or a computer network. The ever increasing number of content providers for television broadcasting provide the televisions viewers with a corresponding number of channels for viewing broadcast digital video content, including Network television broadcast channels, pay-per-view channels, local access channels, etc. While each channel provides different content to the viewers that are tuned into the channel with their television receivers, the content is not specifically addressed to specific viewers. Rather, all viewers of each channel will receive all of the broadcast digital video signals on that channel. In any one broadcast, some of the information will not be of interest to some of the viewers. It would be an advance in the art to broadcast digital video signals to a targeted viewer.

WO 00 44173 A relates to remote viewing of selected messages at a subscriber remote receiving location. A user has access to media-rich messages via a television without needing a home computer to do so. The television screen is utilized as a medium to handle and view such messages.

In US-A-4 829 569, a subscription television system in which individual decoders are enabled to receive individually addressed messages is described. A composite signal including video and teletext also comprises addressed packets, which are detected by decoders and which indicate that a message addressed to a particular subscriber is forthcoming, and system control data. The decoder detects an addressed packet addressed to itself, whereby it is enabled to select the appropriate teletext message and to display the same.

US-A-5 497 186 refers to a CATV system in which message reception can be confirmed by a viewer. A center facility transmits, together with a television signal carrying a broadcast program, a message directed to a particular terminal apparatus, address data indicating an address of the particular terminal apparatus, and information quantity data indicating a quantity of the message. Recognizing that the user's terminal apparatus corresponds to the particular terminal based on the address data, the particular terminal apparatus displays all of the message on a TV receiver based on the information quantity data.

WO 93 20654 A describes a method for transmitting teletext signals from a transmitter to a plurality of receivers wherein a plurality of successive and numbered teletext pages are transmitted currently. In addition to the teletext pages determined for all the receivers, it is possible to transmit a plurality of pages which are determined to be received only by one or more selected receivers. Each of these receivers has been allocated a digital address and comprises a store for storing teletext pages. Control signals are transmitted to the selected receiver or receivers on a given teletext page, said control signals comprising addresses of the selected receiver or receivers as well as information on the point or points of time at which teletext pages determined for said receivers will subsequently be transmitted.

EP-A-0 798 886 describes a radio paging and electronic mailbox system using terrestrial and satellite television transmitters. Paging or electronic mailbox information is inserted as a teletext in the blanking interval of an analog video signal and is recognized by teletext decoders in television receivers. The information inserted in the blanking interval in the analog video signal is encoded for particular subscribers and the teletext decoder recognizes and displays the information concerning a particular subscriber only by means of a specific appendix for that subscriber.

EP-A-0 463 451 deals with selective distribution of messages over a communications network. Specific text and/or graphic messages for individual subscribers are distributed on a communications network such as a cable television system. An addressable controller communicates with a plurality of subscriber terminals served by the network. Each subscriber terminal is assigned to a primary message group. Messages are input to the addressable controller for subsequent transmission to a subscriber terminal for display. The messages are tagged with distribution data defining at least one primary message group to receive the message. The tagged text messages are transmitted over the network together with the signals from network service providers. When a message is received at a subscriber terminal, the distribution data is retrieved and used to determine if the message is targeted to the subscriber terminal. If so, the message is processed for display.

US-A-4 866 770 relates to transmitting a composite signal including the information to be transmitted as well as system wide individual decoder and group decoder control signals. The system wide control signal includes data germane to the operation of each of the decoders of the system including the information needed to decode the composite signal.

DE 100 29 643 A discusses interception secure provision of internet protocol services via radio medium, e.g., satellite by combining a target address with a unique identification number.

In US-A-5 619 501, a receiver is described that includes an apparatus for processing transmitted entitlement control information including a packet transport processor for selecting signal packets having payloads containing a conditional access payload adder and a remaining payload of entitlement data. Respective payload headers include groups of bytes which are coded in a manner to allow or disallow the respective receivers from processing the entitlement data.

### SUMMARY

It is the object of the present invention to provide improved methods and systems for broadcasting digital video signals to a targeted viewer.

This object is solved by the invention as defined in the independent claims.

Embodiments are given in the dependent claims.

Two signals are transmitted over a multiplexed channel for receipt by a plurality of client devices. One of the signals carries content data and the other signal carries message data associated with an identifier. The content data can be output by each client device, the identifier identifies less than all of the client devices, and the message data can only be output by those client devices identified by the identifier.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1 is a flow diagram that illustrates a process for uploading client device identification information to one or more client data providers, initiating a user request for message data to be sent to a client device using broadcast digital video signals that are broadcast over a broadcast network, sending the message data to the client device by the broadcast network with a token identifying the client device, identifying the token with associated message data at the client device in a broadcast, and outputting the message data at the client device.
Figure 2 illustrates an exemplary environment in which the methods, program products, and systems described herein may be implemented;
Figure 3 illustrates of an example client device, a television, and various input devices that interact with the client device;
Figure 4 is a block diagram that illustrates components of the example client device(s) shown in Figures 2 and 3.

### DETAILED DESCRIPTION

The following discussion is directed to television-based entertainment systems that receive broadcast digital video signals over a broadcast network, such as interactive TV networks, cable networks, and Web-enabled TV networks. Client devices in such systems range from full-resource clients with substantial memory and processing resources, such as TV-enabled personal computers and TV recorders equipped with hard-disks, to low-resource clients with limited memory and/or processing resources, such as traditional set-top boxes. While aspects of the described systems and methods can be used in any of these systems and for any types of client devices, they are described in the context of the following exemplary environment.

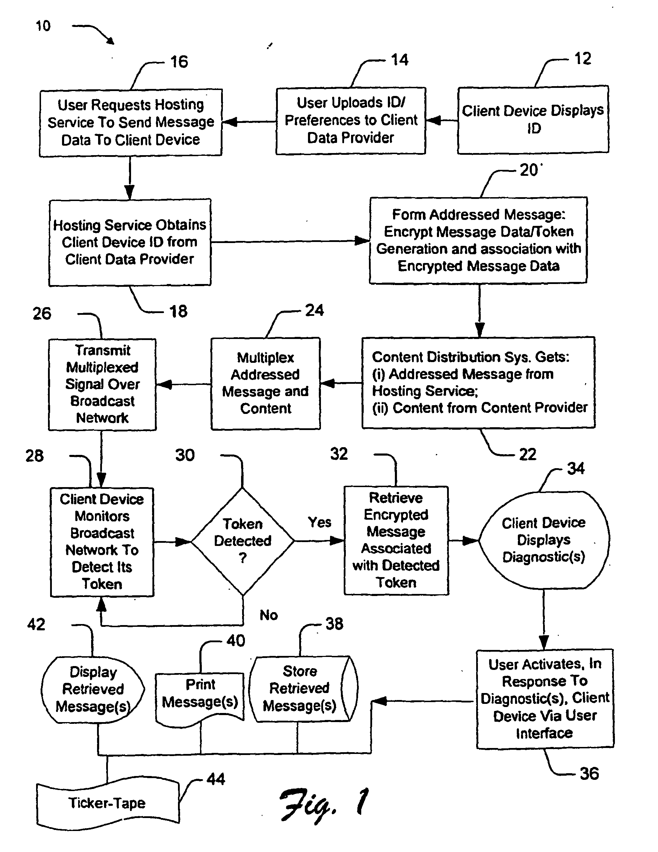

Referring now to a process 10 seen in Figure 1, each client device has an identification that can be stored in the client device in a storage device such as a memory chip, a smart card, or a non-volatile memory device. This identification can be unique to the particular client device. A user of the client device executes a program stored in the client device, as seen in block 12, which causes the identification (ID) to be displayed upon a display device, such as a television. The user can then use a network resource, such as a personal computer or other network enabled device, to connect to an interconnected network, such as the Internet. Once connected, the user communicates with a client data provider that is also in communication with the interconnected network. In the communication, the user provides data that associates a particular user with the identification of the client device, as seen in block 14. The client data provider stores this client device data for future use.

The user, or another user, can use a network resource to submit a request to a hosting service that is also in communication with the interconnected network. The hosting service is a network resource that hosting a site on the network at which the requested service is provided, such as is typical of Web hosting services on the Internet. The request from the user contains information, as seen in block 16, that identifies a user, certain message data to be sent by the hosting service, and a designation that the client device that is associated with the certain user is to receive the message data.

As seen in block 18, upon receipt of the request and related information from the requesting user, the hosting service communicates with the client data provider to obtain the previously stored client device data. The client data provider communicates a token that identifies the client device to the hosting service. As seen in block 20, the token is to be associated with the message data and the message data can be encrypted by the client data provider, or another service, according to a technique that will be unencrypted by the client device identified by the token. The token may also include information as to where the client device is logically located, what type and kind of hardware and software is operational in the client device, and the specific identify of the client device (e.g. its unique serial number).

As seen in block 22, a content distribution system is in communication with one or more content providers, also known as headends, which provide content to the content distribution system. The one or more headends may be acting in the role of an operator, such as a telecommunications service provider, and may have a hierarchical structure ranking from a general headend to a specific headend. As seen in block 24, signals are aggregated and processed at the content distribution system as the encrypted message data and the associated token are multiplexed with content data from the one or more content providers into digital video data. Stated otherwise, the multiplexing of a plurality of signals onto on multiplexed channel takes places in a data insertion process in a headend. The data insertion process inserts broadcast media content in one signal and message data associated with a unique client device ID in another signal.

The digital video data is transmitted, as seen in block 26, as an addressed package in a broadcast signal on the multiplexed channel over a broadcast network as a means of one-way communications with television viewers. The multiplexed channel can be carried by any of several modes of one-way communications to the client device, including satellite, cable, an intranet, or the Internet. The mode of communication can be, for instance, a cable television broadcasting system that uses a special network having servers that are enabled to communicate with the client data providers through the Internet or another network system.

In that many client devices will receive the plurality of signals on any one multiplexed channel from the broadcast network using their respective tuners, each tuner that receives the broadcast also receives the token and the associated message data in the broadcast signal. The token, however, may uniquely identify only one of the receiving client devices. Each client device executes an application on a processor therein so that it will retrieve and display only those message data that have an associated token that identifies the client device, as seen at block 28. As seen at block 30, broadcasts are monitored by each client device until it detects the presence of its token in any one of the plurality of signals on any one multiplexed channel.

At block 32, a token has been detected in the broadcast by a corresponding client device and the associated message data can be unencrypted by using an application program executing on the processor of the client device that is identified by the token. The encryption can be such that only the client device identified in the token will be able to unencrypt the associated message data. Following unencryption of the message data, one or more diagnostics can be output by the client device to provide notice that one or more messages have been received, as seen at block 34. At block 36, the user of the client device can use an input device to interact with a user interface that can be displayed upon an output device. The interaction allows the user to select a mode of output of the received one or more messages. These modes can include outputting the received one or more messages for storage on a hard drive or other electronic storage means 38, for printing on a hardcopy print out 40, for displaying on an electronic display means 42 such as a television, or for printing on a ticket-tape printout 44. The interaction allows the user to delete any received message waiting in a storage queue within the client device.

The foregoing process can be used to target message data to specific viewers of a television broadcast. As such, addressed broadcast message data can be targeted to one or more client devices using respectively associated tokens with the message data that are broadcast with content data (e.g. television programming) in signals on a multiplexed channel. By way of example of one implementation, a user can obtain the identification of a local client set-top box by executing a software program on a processor in the local client set-top box. The program causes the identification to be displayed upon a TV connected of the local client set-top box. This identification can include a designator for a geographic location of the local client set-top box, the type of local client set-top box that reveals its hardware and/or software capabilities, and a unique identifier for the local client set-top box. For example, the designator for the geographic location of the local client set-top box may be a particular ZIP code for the United States of America. The designator for the capabilities of the local client set-top box may indicate relatively low or high memory for data storage capabilities.

Having seen the local client set-top box information, the user then uses a personal computer or other network device to log on to a network, such as the Internet, and to communicate with a client data provider. The client data provider can be a network service, such as a Web hosting service, that stores data about the user. The user's client data can then be accessed by other Web hosting services on the Internet where the user has permitted such access, which may be of a limited nature. An example of a client data provider is the Microsoft Network (MSN) of the Microsoft Corporation of Redmond, Washington. MSN provides a .NET™ PASSPORT® service that, among other services, stores client data that can be retrieved by other Web services on the Internet that are compatible with the NET™ PASSPORT® service. In this example, the user provides the local client set-top box identification to the .NET™ PASSPORT® service of MSN. The user can then use the other Web services to retrieve his or another's local client set-top box previously stored identify from the .NET™ PASSPORT® service of MSN and then send information to his or another's local client set-top box for display on a television.

By way of example, a user can pay for a trip at a travel planning and booking Web site, such as the EXPEDIA.com® service provided by of the Microsoft Corporation of Redmond, Washington. After purchasing an airline ticket, the user can request that a travel itinerary be sent to the user's local client set-top box, as well as that of his friend's, for viewing on their respective televisions. To do so, the user specifies to the Expedia® service his and his friend's logical address, such as an email address or other identifier, as well has his preference for delivery to a local client set-top box associated with the respective logical addresses.

The EXPEDIA.com® service is Web enables to communicate and be interoperable with the .NET™ PASSPORT® service to obtain the identification of the respective local client set-top boxes, if any, as well as any other information. The NET™ PASSPORT® service may detect from the previously stored local client set-top box identification that the capabilities of the requested local client set-top box are insufficient for sending of the travel itinerary, such as where the data of the travel itinerary is too lengthy to be stored by the requested local client set-top box. For example, a local client set-top box may require a hard drive to store extended message data which would otherwise be insufficient to store using only a volatile memory device of smaller storage capacity. Other local client set-top box limitation include limited color receipt capabilities, text only receipt, and specific requirements of routing any and all addressed broadcast communications to the local client set-top box. The .NET™ PASSPORT® service may also detect that his friend does not have a previously stored local client set-top box. In these cases, a diagnostic may be sent back to the user via the EXPEDIA® service.

The EXPEDIA.com® service, the .NET™ PASSPORT® service, or a related service, constructs a token identifying each local client set-top box obtained from the .NET™ PASSPORT® service. The travel itinerary is encrypted and transmitted with the associated token by these or another service to a content distribution system that also receives content from a content provider. By way of example, the MSNBC Corporation (MSNBC) is a content provider that provides content data (e.g. television programming) for broadcasting in digital video signals over a multiplexed channel that is carried by various satellite and cable television systems. The signal carrying the content data is received by the content distribution system, multiplexed with a signal carrying the encrypted travel itinerary and associated token, and then broadcast on the multiplexed channel for the MSNBC Network television to the respective satellite and cable television systems. The content distribution system can be incorporated into a function of the broadcast function so that the targeted messages can be sent over the multiplexed channel.

The two designated local client set-top boxes both have tuners that receive the MSNBC Network broadcast. Each local client set-top box executes a program that monitors the received multiplexed digital video signals to detect therein the present of the token that identifies their respective local client set-top box. When the respective token is identified by the respective local client set-top box, the respective local client set-top box executes a program to issue a diagnostic. The diagnostic can be visual or audible to the user, such an illuminated LED on the local client set-top box that indicates that a message is waiting to be displayed. In response, the user can use an input device to input instructions to a user interface, such as a menu that is displayed on the television by the local client set-top box. The user specifies by input to the user interface that the message data is to be displayed on the television. In response, the local client set-top box displays the travel itinerary on the television. The user can use the input device to input a request to the user interface that the travel itinerary can stored in a storage device of the user's local client set-top box or deleted from a queue of messages sent to the user's local client set-top box.

The foregoing application can be applied to other broadcast addressed messaging. For instance, a first user uploads a photo album of digital photographs to a Web site. The first user provides a second user's identify and issues a request to the Web site to broadcast the photo album to the local client set-top box of the second user. The Web site, which has a server that is enabled to communicate with a client data provider, queries the same to obtain information about the existence and characteristics of the local client set-top box of the second user. If the local client set-top box does not exist or lacks the capacity or other characteristics to receive an addressed broadcast message containing the photo album, the first user can be notified by way of an interactive diagnostic during the session with the Web site. Otherwise, the first user can be informed that the addressed broadcast of the photo album will proceed so that the second user will be able to receive the broadcast at the second user's local client set-top box.

The client data provider can encrypt the photo album and attached a token thereto that corresponds to the specific identify of the second user's local client set-top box, such as its serial number. Content data (e.g. television programming) from a content provider is carried in a signal that is multiplexed with a signal that carries the encrypted photo album. The multiplexed signals are broadcast on a multiplexed channel of a broadcast network. A tuner in the second user's local client set-top box can receive the multiplexed channel and monitors signals on the multiplexed channel, both when it is and when is not being used by the user. The second user's local client set-top box detects the addressed broadcast in one of the signals by finding a match of its unique token in the signal. An application program running on one or more processors in the client set-top box unencrypts the photo album and issues a diagnostic to the second user that an addresses broadcast message has been detected.

The foregoing process can also be applied to a financial services entity that has a Web hosting service to provide stock market quotations. Here, quotes are provided in addressed messages that are broadcast, on demand or upon a user-designated event (e.g. a predetermined change in stock price), to the local client set-top box of a user. The financial quotations Web hosting service obtains a unique token for the user's local client set-top box, as well as any encrypting algorithm for the quotation messaging, from a client data provider for which a server for the Web hosting service is enabled. The tuner of the user's local client set-top box monitors a one-way broadcast multiplexed channel to detect its token and issues a diagnostic upon detection of the same.

A particular application for the broadcast addressed messaging described herein is that of the issuing of alerts to a local client set-top box of a user. To configure the terms, events, and/or conditions upon which an alert will be sent to the user's local client set-top box, the user interacts with a user interface of a client data provider. This interaction can be quite diverse and particularly directed to applications suitable for viewing messages on a television. For example, a user can use a Web hosting service to maintain a personal calendar, where the Web hosting service has a network resource, such as a server, that is enabled to communicate with a client data provider that maintains a database of local client set-top box information. The user can request the Web hosting service to broadcast an addressed alert to the user's local client set-top box based upon a scheduled event noted in the user's calendar that is maintained by the Web hosting service: The configuration of any such alert event conditioning process can be operated by the user from any two-way network resource having access to an interconnected network with which the Web hosting service is also in communication, such as the Internet.

While the foregoing applications have been described in terms of a local client set-top box, the inventors contemplate other addressees for receipt of such addressed broadcast messages, including the client devices described below - any of which can communicate with a network, such as through a cable or satellite modem. Additionally, the display mechanism for a client device need not be a television but can other output devices, such as a storage device (e.g. a hard drive), a printer (e.g. a ticker tape machine to print out stock prices), an electronic billboard for displaying addressed broadcast messages to a large viewing area such as to vehicle traffic present on a section of freeway, an image projector for viewing on a projection screen, etc.

While aspects of the described methods, program products, and data structures can be used in any of these systems and for any types of client devices, they are described in the context of the following exemplary environment.

### Exemplary Environment

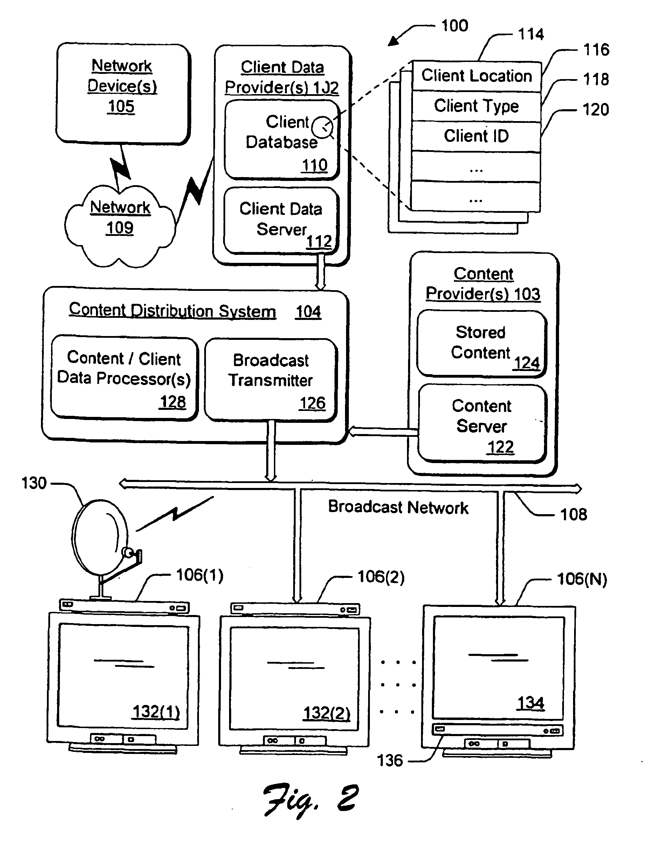

Figure 2 illustrates an exemplary environment 100 in which the methods, programs, and systems described herein may be implemented. Exemplary environment 100 is a television entertainment system that facilitates distribution of content and client data to multiple viewers. The environment 100 includes one or more client data providers 102, one or more content providers 103, a content distribution system 104, and multiple client devices 106(1), 106(2), ..., 106(N) coupled to the content distribution system 104 via a broadcast network 108. Also included in environment 100 are one or more network devices that communicate with client data provider(s) 102 through an interconnected network 109.

Client data provider 102 includes a client data base 110 and a client data server 112. The Client database 110 stores electronic files of client data 114 which is used to generate tokens that respectively identify the multiple client devices 106(1), 106(2), ..., 106(N). The client data in the client database 110 can be separately multiplexed into a data stream to be carried in a signal, upon request for an addressed message to be broadcast. For discussion purposes, an electronic file maintains client data 114 that can include, for each respective client device (i), a client location 116 such as a logical and/or geographic location of a network in communication with the client device, a client type 118 that can indicate software and/or hardware attributes or characteristics of the client device, a client identification 120 such as a serial number of the client device, and other information such as encryption algorithm identifiers that can be used to encrypted addressed messages to be broadcast.

The client data server 112 processes the client data prior to distribution. The processing may involve any number of techniques to reduce, modify, or enhance the client data. Such processes might include selection of encryption algorithms, content, content compression, text data and style data to be used to output text data from the client devices 106(*i*), and the like. The client data server 112 controls distribution of the encrypted messages that are addressed to client devices 106(*i*) from client data provider 102 to the content distribution system 104 using, for example, a file transfer protocol (FTP) over a TCP/IP network (e.g., Internet, UNIX, etc.). Alternatively, this distribution can be transmitted directly from a satellite to a local client satellite dish receiver for communication to a client device such as a local client set-top box.

Content provider 103 includes a content server 122 and stored content 124, such as movies, television programs, commercials, music, and similar audio and/or video content. Content provider 103, also known as a 'headend', does video insertion from a content source and an advertising source, and then places the content with insertions into a transmission link or a satellite uplink. Content server 122 controls distribution of the stored content 124 to the content distribution system 104. Additionally, content server 102 controls distribution of live content (e.g., content that was not previously stored, such as live feeds) and/or content stored at other locations to the content distribution system 104.

Content distribution system 104 contains a broadcast transmitter 126 and one or more content/client data processors 128. The one or more content / client data processors 128 combine content from content provider(s) 103 and addressed encrypted messages using a token generated from client data from client data provider(s) 102. This combination of data is performed using by a multiplexing process prior to transmitting the content and client data across broadcast network 108 on a multiplexed channel. Broadcast transmitter 126 broadcasts signals, such as cable television signals, across broadcast network 108 on the multiplexed channel. Broadcast network 108 can include a cable television network, RF, microwave, satellite, and/or data network, such as the Internet, and may also include wired or wireless media using any broadcast format or broadcast protocol. Additionally, broadcast network 108 can be any type of network, using any type of network topology and any network communication protocol, and can be represented or otherwise implemented as a combination of two or more networks.

A particular content processor may encode, or otherwise process, the received content into a format that is understood by the multiple client devices 106(1), 106(2), ..., 106(N) coupled to broadcast network 108. Although Figure 2 shows a single program data provider 102, a single content provider 103, and a single content distribution system 104, environment 100 can include any number of client data providers and content providers coupled to any number of content distribution systems.

Content distribution system 104 is representative of a headend service that provides client data, as well as content, to multiple subscribers. Each content distribution system 104 may receive a slightly different version of the client data that takes into account different aspects of one or more intended multiplexed channels upon which a signal containing the client data will be broadcast. The client data server 112 creates different versions of the client data that include those multiplexed channels of relevance to respective headend services. Content distribution system 104 transmits the addressed message data and associated token generated from the client data to each of the multiple client devices 106(1), 106(2), ..., 106(N) that can receive the one or more multiplexed channels. In one implementation, for example, content distribution system 104 utilizes a carousel file system to repeatedly broadcast the addressed message data over an out-of-band (OOB) channel to the client devices 106.

Each network device (i) can be used to upload a unique identifier for each client device (i) to client data provider 102 for storage in client database 100. Once a user knows the unique identifier for a particular client device, such as a serial number thereof, the user can connect to interconnected network 109 from network device (i) and transmit the unique identifier through interconnected network 109 to client data server 112. Client data server 112 can then store the unique identifier in client database 100.

Client devices 106(i) can be implemented in a number of ways. For example, a client device 106(1) receives broadcast content from a satellite-based transmitter via a satellite dish 130. Client device 106(1) is also referred to as a local client set-top box or a satellite receiving device. Client device 106(1) is coupled to a television 132(1) for presenting the content received by the client device (e.g., audio data and video data), as well as a graphical user interface. A particular client device 106 can be coupled to any number of televisions 132 and/or similar devices that can be implemented to display or otherwise render content. Similarly, any number of client devices 106 can be coupled to a television 132.

Client device 106(2) is also coupled to receive broadcast content from broadcast network 108 and provide the received content to associated television 132(2). Client device 106(N) is an example of a combination television 134 and integrated local client set-top box 136. In this example, the various components and functionality of the local client set-top box are incorporated into the television, rather than using two separate devices. The local client set-top box incorporated into the television may receive broadcast signals via a satellite dish (similar to satellite dish 130) and/or via broadcast network 108. In alternate implementations, client devices 106 may receive broadcast signals via the Internet or any other broadcast medium.

Each client device 106 has a computational device to execute a token monitoring and message retrieval application that utilizes its own unique identity. This application causes a tuner in each client device 106 to monitor a broadcast on one or more multiplexed channels for the presence of its identity in a token in the broadcast. Upon detection of same, the application retrieves the message associated with the token, unencrypts any encrypted portion of the message, and outputs a diagnostic from the client device 106. The token monitoring and message retrieval application also enables a TV viewer to navigate through an onscreen menu having menu items that, upon demand, displays retrieve messages to the viewer. With the application, the TV viewer can look at each retrieved message on the television, delete the messages, and/or save the messages to a local storage device for future display.

### Exemplary Client Device

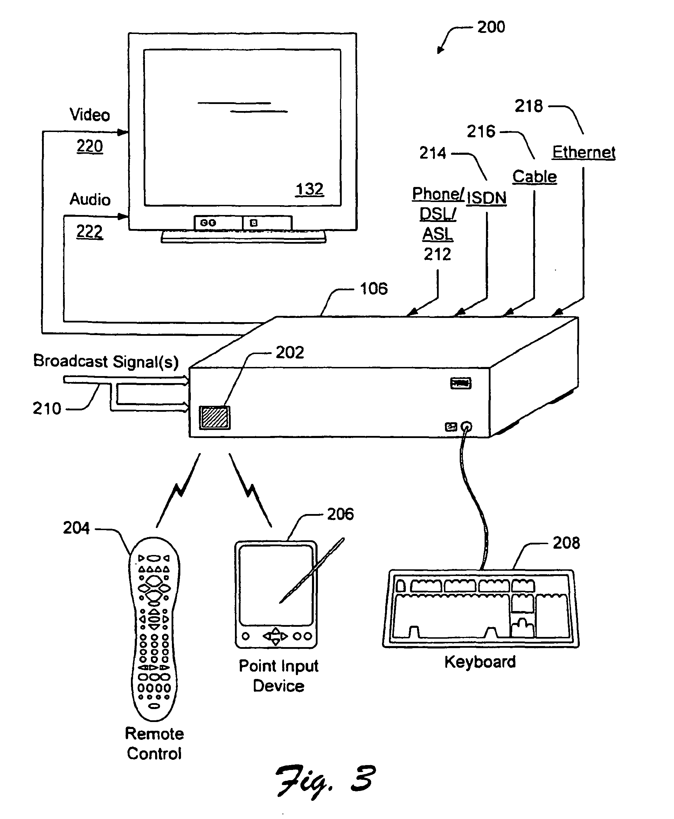

Figure 3 illustrates an exemplary implementation 200 of a client device 106 shown as a standalone unit that connects to a television 132. Client device 106, which can be a television-based entertainment system such as a digital video data system, can be implemented in any number of embodiments, including as a local client set-top box, a satellite receiver, a TV recorder with a hard disk, a game console, an information appliance, and so forth. Client device 106 includes a wireless receiving port 202, such as an infrared (IR) or Bluetooth wireless port, for receiving wireless communications from a remote control device 204, a handheld input device 206, or any other wireless device, such as a wireless keyboard. Handheld input device 206 can be a personal digital assistant (PDA), handheld computer, wireless phone, or the like. Additionally, a wired keyboard 208 is coupled to communicate with the client device 106. In alternate embodiments, remote control device 204, handheld device 206, and/or keyboard 208 may use an RF communication link or other mode of transmission to communicate with client device 106.

Client device 106 receives one or more broadcast signals 210 from one or more broadcast sources, such as from a satellite or from a broadcast network. Client device 106 includes hardware and/or software for receiving and decoding broadcast signal(s) 210, such as an NTSC, PAL, SECAM or other TV system video signal. Broadcast signal(s) 210 can be multiplexed to be carried on a multiplexed channel of broadcast network 108. One signal carries broadcast media that is received by client devices 106(1) through 106(N) for display, respectively, upon televisions 132(1) through 132(N), as seen in Figure 2. Another signal carries message data for specifically for only one client device 106. The message data, which may be encrypted, has therein, or is associated with, a token or identifier that uniquely identified the one client device 106.

Client device 106 also includes hardware and/or software for providing the user with a graphical user interface (GUI) that can be displayed upon television 132. The GUI can be used by the user for a variety of purposes. One such purpose is to allow the user to display each retrieved message on the television, delete the messages, and/or save the messages to a local storage device for future display. The user also can use the GUI, for example, to access various network services as is typical for interactive television applications, configure the client device 106, and perform other functions as discussed below.

Client device 106 is capable of communicating with other devices via one or more connections including a DSL/ADSL or conventional telephone link 212, an ISDN link 214, a cable link 216, and an Ethernet link 218. Client device 106 may use any one or more of the various communication links 212-218 at a particular instant to communicate with any number of other devices. In the case where client device 106 uses communication links 212-218 for an interactive television application, these links facilitate bi-directional communications between a viewer of a television program and, for example, the broadcaster or developer of the television program. By way of example, communication links 212-218 can provide communications via DSL, ADSL, telephone, ISDN, Cable, Ethernet, etc.

Client device 106 generates video signal(s) 220 and audio signal(s) 222, both of which are communicated to television 132. The video signals and audio signals can be communicated from client device 106 to television 132 via an RF (radio frequency) link, S-video link, composite video link, component video link, or other communication link. Although not shown in Figures 2 or 3, client device 106 may include one or more lights or other indicators identifying its current status. By way of example, when client device 106 detects the presence of its identifying token in a broadcast signal, one or more lights or other indicators can emit an identifier that addressed messages have been received. Additionally, the client device may include one or more control buttons, switches, or other selectable controls for controlling operation of the device.

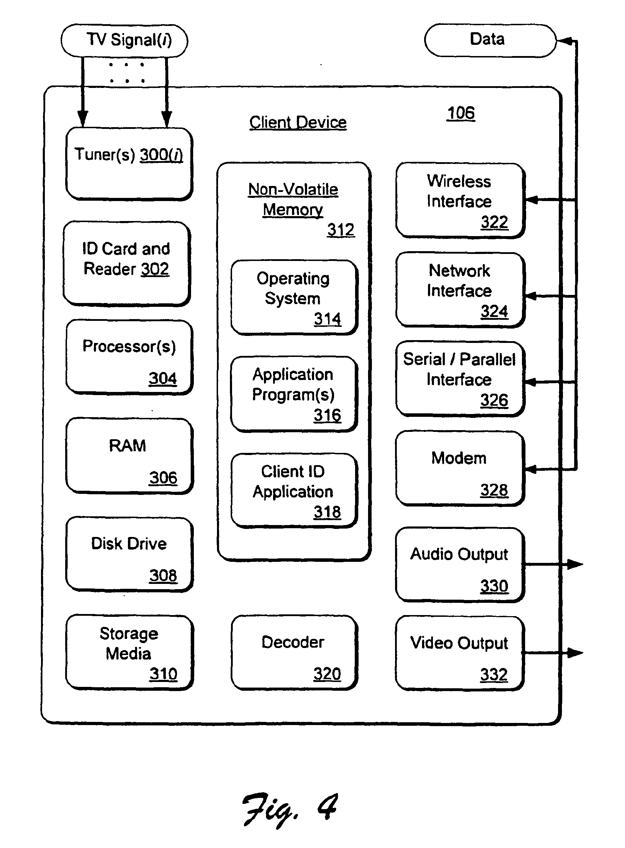

Figure 4 illustrates selected components of client device 106 shown in Figures 2 and 3. Client device 106 includes one or more tuner 300(i) representative of one or more in-band tuners that tune to various frequencies or multiplexed channels to receive television signals, as well as out-of-band tuners that-can tune to one or more broadcast multiplexed channel over which, for example, addressed messages with associated client data tokens are broadcast to client devices 106(i). An identity (ID) card and a reader therefore 302 can be included in client device 106. The ID card can be a 'smart card' and bears the type, model, serial number, etc. that identifies client device 106. When the ID card is a smart card, it can be inserter in the reader for use by other components of client device 106. Alternatively, the identification information for client device (*i*) can be stored in other components of client device 106, such volatile or nonvolatile memory components.

Client device 106 also includes one or more processors 304 and one or more memory components. Examples of possible memory components include a random access memory (RAM) 306, a disk drive 308, a mass storage component 310, and a non-volatile memory 312 (e.g., ROM, Flash, EPROM, EEPROM, etc.). Alternative implementations of client device 106 can include a range of processing and memory capabilities, and may include more or fewer types of memory components than those illustrated in Figure 4. For example, full-resource clients can be implemented with substantial memory and processing resources, including the disk drive 308 to store content for replay by the viewer. Low-resource clients, however, may have limited processing and memory capabilities, such as a limited amount of RAM 306, no disk drive 308, and limited processing capabilities.

Processor(s) 304 process various instructions to control the operation of client device 106 and to communicate with other electronic and computing devices. The memory components (e.g., RAM 306, disk drive 308, storage media 310, and non-volatile memory 312) store various information and/or data such as content, electronic programming guide data, configuration information for client device 106, and/or graphical user interface information.

An operating system 314 and one or more application programs 316 may be stored in non-volatile memory 312 and executed on processor 304 to provide a runtime environment. A runtime environment facilitates extensibility of client device 106 by allowing various interfaces to be defined that, in turn, allow application programs 316 to interact with client device 106. In the illustrated example, a client ID application 318 is stored in memory 312. Application 318, which can be a token monitoring and message retrieval application, when executed causes tuners 300(i) to monitor a broadcast on one or more multiplexed channels for the presence of its identity in a token in the broadcast. Upon detection of same, application 318 retrieves the message associated with the token, unencrypts any encrypted portion thereof, and outputs a diagnostic from client device 106. Application 318 also enables a TV viewer to navigate through an onscreen menu having menu items that, upon demand, displays retrieve messages to the viewer. With the application 318, the TV viewer can look at each retrieved message on the television, delete the messages, and/or save the messages to a local storage device for future display.

Other application programs 316 that may be implemented at client device 106 include a browser to browse the Web, an email program to facilitate electronic mail, and so on as is typical of local client set-top boxes having Internet access (e.g. Web TV® services provided by Microsoft Corporation of Redmond, Washington, USA) and interactive TV applications. Client device 106 can also include other components pertaining to a television entertainment system which are not illustrated in this example for simplicity purposes. For instance, client device 106 can include a user interface application and user interface lights, buttons, controls, etc. to facilitate viewer interaction with the device.

Client device 106 also includes a decoder 320 to decode a broadcast video signal, such as an NTSC, PAL, SECAM or other TV system video signal. Alternatively, a decoder for client device 106 can be implemented, in whole or in part, as a software application executed by processor(s) 304. Client device 106 further includes a wireless interface 322, a network interface 324, a serial and/or parallel interface 326, and a modem 328. Wireless interface 322 allows client device 106 to receive input commands and other information from a user-operated input device, such as from a remote control device or from another IR, Bluetooth, or similar RF input device.

Network interface 324 and serial and/or parallel interface 326 allows client device 106 to interact and communicate with other electronic and computing devices via various communication links. Although not shown, client device 106 may also include other types of data communication interfaces to communicate with other devices. Modem 328 facilitates client device 106 in communications with other electronic and computing devices via a conventional telephone line. Components seen at reference numerals 316 and 322-328 facilitate applications where client device 106 has Internet access or communicates data on a network.

Client device 106 also includes an audio output 330 and a video output 332 that provide signals to a television or other device that processes and/or presents or otherwise renders the audio and video data. Although shown separately, some of the components of client device 106 may be implemented in an application specific integrated circuit (ASIC). Additionally, a system bus (not shown) typically connects the various components within client device 106, A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

General reference is made herein to one or more client devices, such as client device 106. As used herein, "client device" means any electronic device having data communications, data storage capabilities, and/or functions to process signals, such as broadcast signals, received from any of a number of different sources.

### Conclusion

Portions of the methods, program products, and systems described herein may be implemented in any combination of hardware, software, and/or firmware. For example, one or more application specific integrated circuits (ASICs) or programmable logic devices (PLDs) could be designed or programmed to implement one or more of these portions.

Although the methods, program products, and data structures have been described in language specific to structural features and/or methodological steps, it is to be understood that the invention defined in the appended claims is not necessarily limited to the specific features or steps described. Rather, the specific features and steps are disclosed as preferred forms of implementing the claimed invention.

**The following is a list of further preferred embodiments of the invention:**

Embodiment 1: A method comprising transmitting two signals over a multiplexed channel for receipt by a plurality of client devices, one of the signals carrying content data, and the other signal carrying message data associated with an identifier, such that:
the content data can be output by each said client device;
the identifier identifies less than all of the client devices; and
the message data can only be output by those client devices identified by the identifier.

Embodiment 2: The method as defined in embodiment 1, further comprising:
receiving the two signals in the multiplexed channel at the plurality of client devices;
detecting in one of the signals at an identified said client device the presence of one said identifier that identifies the identified said client device; and
outputting a diagnostic from the identified said client device representative of a receipt of the message data associated with the one said identifier.

Embodiment 3: The method as defined in embodiment 2, further comprising outputting from the identified said client device the message data associated with the one said identifier.

Embodiment 4: The method as defined in embodiment 1, wherein the identifier comprises means for identifying less than all of the client devices.

Embodiment 5: The method as defined in embodiment 1, wherein the identifier comprises means for identifying only one of the client devices.

Embodiment 6: A computer-readable medium storing computer-executable instructions that, when executed on a computer, performs the method of embodiment 1.

Embodiment 7: A television broadcasting system for broadcasting digital video signals over a broadcast network that is in communication with the plurality of client devices comprising means for executing instructions that, when executed, performs the method of embodiment 1.

Embodiment 8: A method comprising:
receiving signals at a client device from a transmission on a multiplexed channel received by other said client devices;
detecting at the client device, in one of the signals, the presence of an identifier unique to client device and associated with message data; and
outputting a diagnostic from the client device representative of a receipt of the message data associated with the identifier.

Embodiment 9: The method as defined in embodiment 8, further comprising outputting the message data associated with the identifier from the client device, wherein another of the signals carries broadcast media for output from both the client device and the other said client devices.

Embodiment 10: The method as defined in embodiment 8, further comprising, prior to the detecting at the client device, uploading the identifier unique to the client device to a first network resource that is in communication through an interconnected network with a second network resource from which the client device receives the signals from the transmission on the multiplexed channel.

Embodiment 11: The method as defined in embodiment 8, wherein the identifier unique to the client device comprises means for identifying only the client device.

Embodiment 12: A computer-readable medium storing computer-executable instructions that, when executed on the client device, performs the method of embodiment 8.

Embodiment 13: A method comprising:
receiving broadcast digital video signals in a multiplexed channel of a broadcast network at a receiver;
identifying, at the receiver, a token associated with message data in one said digital video signal that uniquely identifies the receiver; and
storing the message data in the receiver.

Embodiment 14: A computer-readable medium storing computer-executable instructions that, when executed on the receiver, perform the method of embodiment 13.

Embodiment 15: A method comprising:
receiving, at a first network resource, a name of a client device;
transmitting, from the first network resource to a second network resource, the name of the client device and a request for an identifier of the client device;
receiving, from the second network resource at the first network resource, the identifier of the client device;
transmitting, from the first network resource to a third network resource, message data and the identifier of the client device;
receiving, at the third network resource, the message data and the identifier of the client device; and
transmitting, from the third network resource to the client device and to other said client devices, two signals over a multiplexed channel, wherein:
   one of the signals carries content data, and the other signal carries the message data associated with the unique identifier of the client device; and
   the identifier identifies the client device and less than all of the other said client devices.

Embodiment 16: The method as defined in embodiment 15, further comprising:
receiving, from the second network resource at the first network resource, a diagnostic representative of the absence of the identifier of the client device; and
transmitting, from the first network resource to a fourth network resource, a diagnostic representative of the absence of the identifier of the client device, wherein the fourth network resource transmitted the name of the client device that was received by the first network resource.

Embodiment 17: The method as defined in embodiment 15, further comprising, prior to the transmitting two signals over a multiplexed channel:
encrypting the message data with an encryption algorithm that is compatible with an unencryption process resident in any said client device identified by the identifier, wherein the encrypting algorithm compatible is not compatible with any unencryption process resident in those said client devices that are not identified by the identifier.

Embodiment 18: The method as defined in embodiment 15, wherein:
the content data can be output from both the client device and the other said client devices; and
the message data can only be output from those client devices identified by the identifier.

Embodiment 19: The method as defined in embodiment 15, wherein the identifier comprises means for identifying only the client device.

Embodiment 20: A computer-readable medium storing computer-executable instructions that, when executed on a computer, performs the method of embodiment 15.

Embodiment 21: A television broadcasting system for broadcasting digital video signals over a television broadcast network to the client device and the other said client devices, the television broadcasting system comprising means for executing instructions that, when executed, performs the method of embodiment 15.

Embodiment 22: A method for associating an addressed message with broadcast media, comprising:
providing a data packet in a first signal structure that may be electronically transferred over a communication link to a television broadcast network;
associating with the data packet message data that includes means for identifying less than all network resources in communication with the television broadcast network through the communication link;
providing broadcast media in a second signal structure that may be electronically transferred over the communication link to a television broadcast network;
multiplexing the first and second signals into a multiplex channel; and
receiving by a service provider the first and second signal structures through the multiplex channel over the communication link.

Embodiment 23: The method as defined in embodiment 22, wherein the message data further comprises text data and style data to be used to output the text data from one said network resource that is uniquely identified by the means for identifying less than all network resources in communication with the television broadcast network through the communication link.

Embodiment 24: A computer program product, capable of being implemented in a network resource in communication with the television broadcast network through the communication link, for performing the method of embodiment 22.

Embodiment 25: A television broadcasting system for broadcasting digital video signals over a television broadcast network to a local client set-top box and other said local client set-top boxes, the television broadcasting system comprising:
means for forming a data structure including:
   message data; and
   means, associated with the message data, for uniquely identifying the local client set-top box from among the other said local client set-top boxes;
means for multiplexing into a multiplexed channel:
   a digital video signal carrying the data structure; and
   a digital video signal carrying broadcast media;
means for transmitting the digital video signals over the multiplexed channel to the local client set-top box and the other said local client set-top boxes.

Embodiment 26: An addressed broadcast message comprising:
a data packet residing in a first signal structure that may be electronically transferred through a television broadcast network over a communication link with another second signal structure having broadcast media residing therein; and
message data inserted into the data packet and including means for identifying less than all network resources in communication with the television broadcast network through the communication link.

Embodiment 27: A computer-readable medium storing computer-executable instructions that, when executed on a computer, assembles the addressed broadcast message of embodiment 26.

### Important Note:

While the attached claims relate to a preferred aspect of the present invention, the applicant wishes to reserve the right to file one or several further divisional applications at a later point in time for other aspects disclosed in the application. Those further applications will be divided out from the present divisional application. By this statement, the public is herewith informed that more divisional applications relating to different subject matter may follow.

## Claims

1. A method comprising broadcasting, over a multiplexed channel of a television broadcast network (108) to a plurality of client devices (106, 106(1)-106(N)), each having a tuner for receiving the multiplexed channel, a plurality of signals each carrying broadcast media or one of a plurality of encrypted message data, wherein:
each said encrypted message data is associated with an identifier; and
each said identifier is unique to one of the client devices;
said one of the client devices is capable of unencrypting the encrypted message data;
**characterised in that** said identifier is obtained from a web hosting service that stores data about respective users to permit the users to access other web services on an internet.

2. The method as defined in claim 1, further comprising:
receiving the plurality of signals in the multiplexed channel at the plurality of client devices;
detecting (28) in one of the signals at an identified said client device the presence of one said identifier that is unique to the identified said client device; and
outputting (34) an indication from the identified said client device representative of a receipt of the encrypted message data associated with the one said identifier.

3. The method as defined in claim 2, further comprising:
unencrypting, at the identified said client device, the encrypted message data associated with the one said identifier, and
outputting (38-44), at the identified said client device, the unencrypted message data.

4. The method as defined in claim 1 or 2, further comprising outputting (38-44) from the identified said client device the message data associated with the one said identifier.

5. The method as defined in one of claims 1 to 4, wherein the identifier is arranged to identify only one of the client devices.

6. The method as defined in one of claims 1 to 5, wherein the web hosting service obtains a particular said message from another said web service to be transmitted to a respective said client device that is identified by the web hosting service as corresponding to a respective said user.

7. A computer-readable medium (306-318) storing computer-executable instructions that, when executed on a computer (102-106, 106(1)-106(N)), performs each of the steps of the method of one of claims 1 to 6.

8. A television broadcasting system (100) for broadcasting digital video signals over the television broadcast network to the plurality of client devices, the television broadcasting system comprising means for executing instructions that, when executed, performs each of the steps of the method of one of claims 1 to 6.

## Patentansprüche

1. Verfahren, das Ausstrahlen (broadcasting) einer Vielzahl von Signalen, die jeweils Ausstrahlungsmedien oder bestimmte einer Vielzahl verschlüsselter Nachrichtendaten tragen, über einen gemultiplexten Kanal eines Televisionsausstrahlungs-Netzes (108) zu einer Vielzahl von Client-Vorrichtungen (106, 106(1)-106(N)) umfasst, die jeweils einen Tuner zum Empfangen des gemultiplexten Kanals haben, wobei:
die verschlüsselten Nachrichtendaten jeweils mit einer Kennung assoziiert sind; und
jede der Kennungen einzigartig für eine der Client-Vorrichtungen ist;
die eine der Client-Vorrichtungen in der Lage ist, die verschlüsselten Nachrichtendaten zu entschlüsseln;
**dadurch gekennzeichnet, dass** die Kennung von einem Web-Hosting-Dienst bezogen wird, der Daten über jeweilige Benutzer speichert, um den Benutzern zu gestatten, auf andere Web-Dienste im Internet zuzugreifen.

2. Verfahren nach Anspruch 1, das des Weiteren umfasst:
Empfangen der Vielzahl von Signalen in dem gemultiplexten Kanal an der Vielzahl von Client-Vorrichtungen;
Erfassen (28) des Vorhandenseins einer der Kennungen, die einmalig für die identifizierte Client-Vorrichtung ist, in einem der Signale an einer identifizierten Client-Vorrichtung; und
Ausgeben (34) einer Anzeige von der identifizierten Client-Vorrichtung, die repräsentativ für einen Empfang der verschlüsselten Nachrichtendaten ist, die mit der einen Kennung assoziiert sind.

3. Verfahren nach Anspruch 2, das des Weiteren umfasst:
Entschlüsseln der verschlüsselten Nachrichtendaten, die mit der einen Kennung assoziiert sind, an der identifizierten Client-Vorrichtung; und
Ausgeben (38-44) der entschlüsselten Nachrichtendaten an der identifizierten Client-Vorrichtung.

4. Verfahren nach Anspruch 1 oder 2, das des Weiteren Ausgeben (38-44) der mit der einen Kennung assoziierten Nachrichtendaten von der identifizierten Client-Vorrichtung umfasst.

5. Verfahren nach einem der Ansprüche 1 bis 4, wobei die Kennung so eingerichtet ist, dass sie nur eine der Client-Vorrichtungen identifiziert.

6. Verfahren nach einem der Ansprüche 1 bis 5, wobei der Web-Hosting-Dienst eine bestimmte der Nachrichten von einem anderen Web-Dienst bezieht, um sie zu einer jeweiligen Client-Vorrichtung zu senden, die durch den Web-Hosting-Dienst als einem jeweiligen Benutzer entsprechend identifiziert wird.

7. Computerlesbares Medium (306-318), das durch Computer ausführbare Befehle speichert, die, wenn sie auf einem Computer (102-106, 106(1)-106(N)) ausgeführt werden, jeden der Schritte des Verfahrens nach einem der Ansprüche 1 bis 6 durchführen.

8. Televisionsausstrahlungssystem (100) zum Ausstrahlen digitaler Videosignale über das Televisionsausstrahlungs-Netz zu der Vielzahl von Client-Vorrichtungen, wobei das Televisionsausstrahlungssystem eine Einrichtung zum Ausführen von Befehlen umfasst, die, wenn sie ausgeführt werden, jeden der Schritte des Verfahrens nach einem der Ansprüche 1 bis 6 durchführen.

## Revendications

1. Procédé comprenant la diffusion, sur un canal multiplexé d'un réseau de diffusion de télévision (108), à de multiples dispositifs clients (106, 106(1)-106(N)) comportant chacun un sélecteur pour recevoir le canal multiplexé, de multiples signaux dont chacun est porteur de supports de diffusion ou d'une ou de plusieurs données de message cryptées, dans lequel :
chacune desdites données de message cryptées est associée à un identifiant ; et
chacun desdits identifiants est spécifique à l'un des dispositifs clients :
ledit dispositif client est capable de décrypter les données de message cryptées ;
**caractérisé en ce que** ledit identifiant est obtenu à partir d'un service d'hébergement Web qui stocke des données relatives à des utilisateurs respectifs pour permettre aux utilisateurs d'accéder à d'autres services Web sur le réseau Internet.

2. Procédé tel que défini dans la revendication 1, comprenant également :
la réception de multiples signaux sur le canal multiplexé au niveau des multiples dispositifs clients;
la détection (28), dans l'un des signaux au niveau d'un dispositif client identifié desdits dispositifs clients, de la présence dudit identifiant spécifique audit dispositif client identifié ; et
la fourniture en sortie (34) à partir dudit dispositif client identifié d'une indication représentative d'une réception des données de message cryptées associées audit identifiant.

3. Procédé tel que défini dans la revendication 2, comprenant également :
le décryptage, au niveau dudit dispositif client identifié, des données de message cryptées associées audit identifiant; et
la fourniture en sortie (38-44) au niveau dudit dispositif client identifié, des données de message décryptées.

4. Procédé tel que défini dans la revendication 1 ou 2, comprenant également la fourniture en sortie (38-44) à partir dudit dispositif client identifié des données de message associées audit identifiant .

5. Procédé tel que défini dans l'une quelconque des revendications 1 à 4, dans lequel l'identifiant est conçu pour identifier un seul des dispositifs clients.

6. Procédé tel que défini dans l'une quelconque des revendications 1 à 5, dans lequel le service d'hébergement Web obtient un message particulier d'un autre service Web à transmettre à l'un desdits dispositifs clients identifié par le service d'hébergement Web comme correspondant à l'un desdits utilisateurs.

7. Support lisible par ordinateur (306-318) stockant des instructions exécutables par ordinateur qui, lorsqu'elles sont exécutées sur un ordinateur (102-106, 106(1)-106(N)) réalisent chacune des étapes du procédé selon l'une quelconque des revendications 1 à 6.

8. Système de diffusion de télévision (100) pour diffuser des signaux vidéo numériques sur le réseau de diffusion de télévision aux multiples dispositifs clients, le système de diffusion de télévision comprenant des moyens pour exécuter des instructions qui, lorsqu'elles sont exécutées, réalisent chacune des étapes du procédé selon l'une quelconque des revendications 1 à 6.
